# EUROPEAN PATENT SPECIFICATION

(11) **EP 2 954 871 B1**
(45) Date of publication and mention of the grant of the patent: **18.07.2018**
(21) Application number: 14748596.5
(22) Date of filing: 10.02.2014
(51) Int. Cl.: A61C 17/20, A61C 17/02, A61C 3/03

(54) **DEVICE FOR ENDODONTICS BY MEANS OF CONTINUOUS ULTRASONIC IRRIGATION**
VORRICHTUNG FÜR ENDODONTIE MITTELS KONTINUIERLICHER ULTRASCHALLSPÜLUNG
DISPOSITIF D'ENDODONTIE PAR IRRIGATION CONTINUE ULTRASONIQUE

(30) Priority: 11.02.2013 ES 201330168
(43) Date of publication of application: 16.12.2015
(73) Proprietor: Universidade de Santiago de Compostela, 15782 Santiago de Compostela (ES)
(72) Inventor: CASTELO BAZ, Pablo, 15782 Santiago de Compostela (ES); VARELA PATIÑO, Purificación, 15782 Santiago de Compostela (ES); MARTÍN BIEDMA, Benjamín, 15782 Santiago de Compostela (ES); RUÍZ PIÑON, Manuel, 15782 Santiago de Compostela (ES); RIVAS MUNDIÑA, Berta, 15782 Santiago de Compostela (ES)
(74) Representative: ABG Patentes, S.L.
(86) International application number: PCT/ES2014/070089
(87) International publication number: WO 2014/122352

(56) References cited:
- EP-A1- 2 179 704
- WO-A1-2011/136798
- ES-T3- 2 293 595
- JP-A- 2004 313 659
- US-A1- 2009 004 621
- US-A1- 2011 020 765

## Description

### Technical Field of the Invention

The invention relates to a device for endodontics by means of continuous ultrasonic irrigation with negative apical suction for the administration of disinfectants and other adjuvant substances in odontological treatment.

### State of the Art

Endodontics is a branch of dentistry-stomatology that seeks to eliminate diseased (infected) pulp tissue from inside tooth canals. Canal infections are generally polymicrobial infections with strong bacterial interactions (Virtej A, MacKenzie CR, Raab WH, Pfeffer K, Barthel CR. Determination of the performance of various root canal disinfection methods after in situ carriage. J Endod 2007;33:926-929). The main objective of endodontic treatment is to eliminate vital and necrotic tissue, microorganisms and microbial degradation products from the canal system. Root canal irrigation with antibacterial solutions is considered an essential phase for the chemical-mechanical preparation thereof (Haapasalo M, Endal U, Zandi H, Coil JM. Eradication of endodontic infection by instrumentation and irrigation solutions. Endod Topics 2005;10:77-102).

Irrigation with a syringe and needle is still the most commonly used method (Gu LS, Kim JR, Ling J, et al. Review of contemporary irrigant agitation techniques and devices. J Endod 2009;35:791-804). However, irrigation with these conventional methods is not capable of assuring optimum cleaning results in the canal system (Schafer E, Zapke K. A comparative scanning electron microscopic investigation of the efficacy of manual and automated instrumentation of root canals. J Endod 2000;26:660-4). The complex nature of root anatomy with isthmuses, anastomosis, deltas, lateral canals, etc., makes cleaning all the root canal areas very complicated because it complicates to the irrigants the organic tissue dissolution and biofilm destruction (Gutarts R, Nusstein J, Reader A, Beck M. In vivo debridement efficacy of ultrasonic irrigation following hand-rotary instrumentation in human mandibular molars. J Endod 2005;31:166-70).

Use of ultrasonic systems was proposed as a possible solution for cleaning the canal system, the use thereof after the mechanical preparation of the canal system has shown a reduction in the number of bacteria (Spoleti P, Siragusa M, Spoleti MJ. Bacteriological evaluation of passive ultrasonic activation. J Endod 2003;29:12-4). Improved cleaning has been described after the "passive" introduction of ultrasounds; this technique consists of the use of a free file oscillating at ultrasonic frequencies in a canal filled with sodium hypochlorite, this technique is referred to as passive ultrasonic irrigation (van der Sluis LW, Versluis M, Wu MK, Wesselink PR. Passive ultrasonic irrigation of the root canal: a review of the literature. Int Endod J 2007;40:415-26).

Gutarts et *al* (Gutarts R, Nusstein J, Reader A, Beck M. In vivo debridement efficacy of ultrasonic irrigation following hand-rotary instrumentation in human mandibular molars. J Endod 2005;31:166-70) proposed the use of an ultrasonically activated needle placed inside the canal through which sodium hypochlorite could flow, making the continuous replenishment thereof possible. *In vivo* studies showed highly effective cleaning in areas not accessible by instruments (Carver K, Nusstein J, Reader A, Beck M. In vivo antibacterial efficacy of ultrasound after hand and rotary instrumentation in human mandibular molars. J Endod 2007; 33:1038-43; Burleson A, Nusstein J, Reader A, Beck M. The in vivo evaluation of hand/rotary/ultrasound instrumentation in necrotic, human mandibular molars. J Endod 2007;33:782-7). In contrast, it has been found that this method can carry the irrigant further than the distance at which the instrument works, being able to compromise safety of the procedure since sodium hypochlorite extrusion towards the periapical tissue may occur (Hulsmann M, Rodig T, Nordmeyer S. Complications during root canal irrigation. Endod Topics 2009;16:27-63.).

Different studies showed absolute safety when using negative suction cleaning systems compared to irrigation with a conventional syringe and to ultrasonic irrigation (Desai P, Himel V. Comparative safety of various intracanal irrigation systems. J Endod 2009;35:545-9; Fukumoto Y, Kikuchi I, Yoshioka T, et al. An ex vivo evaluation of a new root canal irrigation technique with intracanal aspiration. Int Endod J 2006;39:93-9), furthermore, these devices are capable of carrying the irrigant up to the working length (de Gregorio C, Estevez R, Cisneros R, Paranjpe A, Cohenca N. Efficacy of different irrigation and activation systems on the penetration of sodium hypochlorite into simulated lateral canals and up to working length: An *in vitro* study). However, the cleaning capacity of ultrasonic mechanisms, particularly when continuous ultrasonic irrigation is used, is much greater than negative suction in irregularities of the canal system (Castelo-Baz P, Martin-Biedma B, Cantatore G, Ruíz-Piñón M, Bahillo J, Rivas-Mundiña B, Varela-Patiño P. In vitro comparison of passive and continuous ultrasonic irrigation in simulated lateral canals of extracted teeth. J Endod 2012;38:688-91).

On the other hand, as regards irrigation in curved canals, ultrasonic irrigation can create irregularities in the preparation (Castelo-Baz P, Martin-Biedma B, Cantatore G, Ruiz-Piñón M, Bahillo J, Rivas-Mundiña B, Varela-Patiño P. In vitro comparison of passive and continuous ultrasonic irrigation in simulated lateral canals of extracted teeth. J Endod 2012;38:688-91), however, negative pressure suction allows carrying the irrigants to the apical region, preventing the creation of these irregularities. US 2011/020765 A1 discloses a device for endodontics by means of continuous ultrasonic irrigation with negative apical suction having a cannula and a microcannula.

US 2009/004621 A1 discloses a stainless steel coronal cannula, and an apically bored nickel-titanium microcannula. As a result, this invention seeks to find a device capable of ultrasonically activating the irrigant for carrying the irrigant to canal branches, a device with negative apical suction to prevent the extrusion of the irrigant and with a nickel-titanium microcannula to enable reaching a working length in curved canals with ease. The design of the device combines all these functions therein.

### Description of the Invention

The present invention describes a device for endodontics by means of continuous ultrasonic irrigation for carrying the irrigant to canal branches and with negative apical suction to prevent the extrusion of the irrigant itself, consisting of:
a. Threaded steel connection socket (1).
b. Body (2) made of a plastic material in which the components of the device are inserted.
c. Truncated rhomboid connection joint (3) made of a plastic material.
d. Hollow conduit having a cylindrical section (4).
e. Circular plastic connection joint (5).
f. Stainless steel coronal cannula (6).
g. Apically bored nickel-titanium microcannula (7).

The device for endodontics is characterized in that the socket (1) attached to the body (2) is used for connection to an ultrasonic unit for dental use.

The device for endodontics is characterized in that the body (2) is made of a rigid plastic material and has variable thickness, so that the plastic transmits the ultrasonic vibration and combines all the elements together. Of variable thickness in order to create an increased irrigant flow in the outlet area thereof, so that this irrigant comes out at a higher pressure.

The device for endodontics is characterized in that the truncated rhomboid joint (3) is bored with cylindrical section for allowing attachment thereof to a plastic rubber tube which will carry the irrigant such that there will be no irrigant losses.

The device for endodontics is characterized in that the hollow cylindrical conduit (4) has a variable diameter of 1 mm in the entire path and decreases in the last 3 millimeters to 0.75 mm in its final part for increasing irrigant flow pressure.

The device for endodontics is characterized in that the upper connection joint (5) has a boring with a circular section 0.3 mm in diameter to allow connection to a dental suction system.

The device for endodontics is characterized in that the coronal cannula (6) with a diameter of 0.75 mm is attached to the body (2) by means of chemical attachment or glue.

The device for endodontics is characterized in that the nickel-titanium microcannula (7) is very flexible, such that it allows easily reaching the working length in teeth with curved canals. Furthermore, it is apically bored with 0.3 mm in diameter and is attached to the body (2) by means of chemical attachment or glue.

The device for endodontics is characterized in that the microcannula (7) has six 0.05 mm openings, positioned in two groups, in threes in a vertical direction in 3 mm of the tip of the microcannula.

In the device for endodontics, the coronal cannula (6) ends 8 mm from the microcannula, i.e., the microcannula projects 8 mm with respect to the coronal cannula.

### Brief Description of the Drawing

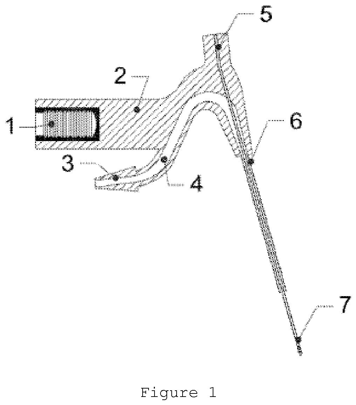

Figure 1 depicts the device and its components.
(1) Threaded steel connection socket.
(2) Body made of a plastic material in which the components of the device are inserted.
(3) Truncated rhomboid connection joint made of a plastic material.
(4) Hollow conduit having a cylindrical section.
(5) Circular plastic connection joint.
(6) Stainless steel coronal cannula.
(7) Apically bored nickel-titanium microcannula.

## Claims

1. A device for endodontics by means of continuous ultrasonic irrigation with negative apical suction, consisting of:
a. a threaded steel connection socket (1) attached to a body (2) by means of chemical attachment or glue, which fits with a plug of an ultrasonic unit;
b. the body (2) is made of a rigid plastic material and have variable thickness in which the components of the device are inserted;
c. a truncated rhomboid connection joint (3) made of a plastic material which is bored with cylindrical section for allowing attachment thereof to a plastic rubber tube which will carry the irrigant such that there will be no irrigant losses;
d. a hollow conduit having a cylindrical section(4) for irrigant flow;
e. a circular plastic connection joint (5) for connection to a dental suction system;
f. a stainless steel coronal cannula (6); and
g. an apically bored nickel-titanium microcannula (7).

2. The device for endodontics according to claim 1, **characterized in that** the hollow cylindrical conduit (4) has a variable diameter between 1 mm and 0.75 mm for increasing irrigant flow pressure.

3. The device for endodontics according to claim 1, **characterized in that** the upper connection joint (5), bored with a circular section of 0.3 mm in diameter for allowing connection to a dental suction system.

4. The device for endodontics according to claim 1, **characterized in that** the coronal cannula (6) with a diameter of 0.75 mm is attached to the body (2) by means of chemical attachment or glue.

5. The device for endodontics according to claim 1, **characterized in that** the apically bored nickel-titanium microcannula (7) with 0.3 mm in diameter is attached to the body (2) by means of chemical attachment or glue.

6. The device for endodontics according to claim 1, **characterized in that** the microcannula (7) has six 0.05 mm openings, positioned in threes in a vertical direction.

7. The device for endodontics according to claim 1, wherein the coronal cannula (6) is 8 mm away from the apical.

## Patentansprüche

1. Vorrichtung zur Endodontie mittels kontinuierlicher Ultraschallspülung mit negativer apikaler Absaugung, bestehend aus:
a. einer mittels chemischer Befestigung oder Klebstoff an einem Körper (2) befestigten, mit Gewinde versehenen Anschlussbuchse (1) aus Stahl, die mit einem Stecker einer Ultraschalleinheit zusammenpasst;
b. wobei der Körper (2) aus einem starren Kunststoffmaterial hergestellt ist und eine variable Dicke hat, in den die Komponenten der Vorrichtung eingesetzt sind;
c. einer aus einem Kunststoffmaterial hergestellten abgestumpften rhombischen Anschlussverbindung (3), die mit einer Bohrung mit einem zylindrischen Querschnitt versehen ist, um deren Befestigung an einem plastischen Gummischlauch zu ermöglichen, der die Spüllösung so transportiert, dass keine Spüllösungsverluste eintreten;
d. einer Hohlleitung mit einem zylindrischen Querschnitt (4) zum Spüllösungsdurchfluss;
e. einer kreisförmigen Anschlussverbindung (5) aus Kunststoff zum Anschluss an ein dentales Absaugsystem;
f. einer koronalen Kanüle (6) aus rostfreiem Stahl; und
g. einer apikal mit einer Bohrung versehenen Mikrokanüle (7) aus Nickel-Titan.

2. Vorrichtung zur Endodontie nach Anspruch 1, **dadurch gekennzeichnet, dass** die hohlzylindrische Leitung (4) einen zwischen 1 mm und 0,75 mm variablen Durchmesser zur Erhöhung des Spüllösungsdurchflussdrucks hat.

3. Vorrichtung zur Endodontie nach Anspruch 1, **dadurch gekennzeichnet, dass** die obere Anschlussverbindung (5) mit einer Bohrung mit einem kreisförmigen Querschnitt von 0,3 mm im Durchmesser versehen ist, um einen Anschluss an ein dentales Absaugsystem zu ermöglichen.

4. Vorrichtung zur Endodontie nach Anspruch 1, **dadurch gekennzeichnet, dass** die koronale Kanüle (6) mit einem Durchmesser von 0,75 mm mittels chemischer Befestigung oder Klebstoff am Körper (2) befestigt ist.

5. Vorrichtung zur Endodontie nach Anspruch 1, **dadurch gekennzeichnet, dass** die apikal mit einer Bohrung versehene Mikrokanüle (7) aus Nickel-Titan mit einem Durchmesser von 0,3 mm mittels chemischer Befestigung oder Klebstoff am Körper (2) befestigt ist.

6. Vorrichtung zur Endodontie nach Anspruch 1, **dadurch gekennzeichnet, dass** die Mikrokanüle (7) sechs 0,05 mm große Öffnungen hat, die in Dreiergruppen in einer vertikalen Richtung angeordnet sind.

7. Vorrichtung zur Endodontie nach Anspruch 1, wobei sich die koronale Kanüle (6) 8 mm von der apikalen Kanüle entfernt befindet.

## Revendications

1. Un dispositif d'endodontie au moyen d'une irrigation par ultrasons continue avec aspiration apicale négative, constitué de :
a. une douille filetée (1) de connexion, en acier, fixée à un corps (2) au moyen d'une fixation chimique ou d'une colle, qui s'adapte à une partie d'insertion d'une unité à ultrasons ;
b. le corps (2) est fait en matière plastique rigide et présente une épaisseur variable dans laquelle sont insérés les composants du dispositif ;
c. un joint de connexion rhomboïde tronqué (3) fait d'une matière plastique qui est percé selon une section cylindrique pour permettre son fixation à un tube en caoutchouc plastique qui transportera l'agent d'irrigation de telle sorte qu'il n'y aura pas de pertes d'agent d'irrigation ;
d. un conduit creux ayant une portion cylindrique (4) pour l'écoulement de l'agent d'irrigation ;
e. un joint de connexion circulaire (5) en matière plastique, pour la connexion à un système d'aspiration dentaire ;
f. une canule coronale en acier inoxydable (6) ; et
g. une micro-canule (7) en nickel-titane à perçage apical.

2. Le dispositif d'endodontie selon la revendication 1,
**caractérisé en ce que** le conduit cylindrique creux (4) a un diamètre variable compris entre 1 mm et 0,75 mm pour augmenter la pression d'écoulement de l'agent d'irrigation.

3. Le dispositif d'endodontie selon la revendication 1,
**caractérisé en ce que** le joint de connexion supérieur (5) est percé selon une section circulaire de 0,3 mm de diamètre pour permettre la connexion à un système d'aspiration dentaire.

4. Le dispositif d'endodontie selon la revendication 1,
**caractérisé en ce que** la canule coronale (6), d'un diamètre de 0,75 mm, est fixée au corps (2) au moyen d'une fixation chimique ou d'une colle.

5. Le dispositif d'endodontie selon la revendication 1,
**caractérisé en ce que** la micro-canule (7) en nickel-titane à alésage apical, d'un diamètre de 0,3 mm, est fixée au corps (2) au moyen d'une fixation chimique ou d'une colle.

6. Le dispositif d'endodontie selon la revendication 1,
**caractérisé en ce que** la micro-canule (7) a six ouvertures de 0,05 mm, positionnées par trois dans une direction verticale.

7. Le dispositif d'endodontie selon la revendication 1,
dans lequel la canule coronale (6) est à 8 mm depuis l'apicale.
